(19) Europäisches Patentamt
European Patent Office
Office européen des brevets

(11) **EP 4 576 542 A1**

## (12) EUROPEAN PATENT APPLICATION

(43) Date of publication:
**25.06.2025 Bulletin 2025/26**

(21) Application number: **24214747.8**

(22) Date of filing: **22.11.2024**

(51) International Patent Classification (IPC):
**H02M 3/158** (2006.01)    **H02M 1/00** (2006.01)

(52) Cooperative Patent Classification (CPC):
**H02M 3/1584; H02M 1/0048**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.12.2023 US 202318394647**

(71) Applicant: **INTEL Corporation
Santa Clara, CA 95054 (US)**

(72) Inventors:
- **AHMAD FU'AAD, Fazli Lut
14100 Simpang Ampat, Pulau Pinang (MY)**
- **AZMI, Nuraini
11900 Bayan Lepas, Pulau Pinang (MY)**
- **PANG, Sze Geat
Gelugor (MY)**
- **TAN, Wei Chang
11900 Penang (MY)**

(74) Representative: **Viering, Jentschura & Partner mbB
Patent- und Rechtsanwälte
Am Brauhaus 8
01099 Dresden (DE)**

## (54) TEMPERATURE-SCALED VOLTAGE REGULATOR

(57) Some embodiments include an apparatus having a voltage regulator; a register circuit to store information associated with a relationship between an ambient temperature range and phase crossovers of phase efficiency curves associated with the voltage regulator; and control circuitry to calculate a target phase crossover value based on the information and an ambient temperature at the voltage regulator.

FIG. 1

EP 4 576 542 A1

**Description**

**Background**

Voltage regulators are widely used in electronic systems such as computers, cellular phones, and many other electronic systems or devices. A voltage regulator can operate to control (or regulate) power provided to circuit components of the system. Some conventional voltage regulators have multiple power stage circuits (also called phases) that can be activated separately to collectively provide power to the system in an efficient fashion. The efficiency of a voltage regulator is based on its design. In a multi-phase voltage regulator, each of the phases has its own efficiency, which is typically represented by an efficiency curve on a graph. During operation, the multi-phase voltage regulator can make a phase transition (switch) from one phase to another based on efficiency phase crossover settings to efficiently regulate power. In some conventional multi-phase voltage regulators, the efficiency phase crossover settings are set (e.g., designed) based on a fixed ambient temperature (e.g., an ambient temperature of 25°C). However, in reality, the ambient temperature at the voltage regulator can change during its operation. The ambient temperature change can be attributed to factors such as heat generated from the voltage regulator (and from other components of the system) and the system design (e.g., cooling fans and airflow). In a voltage regulator having efficiency phase crossovers fixed at a particular ambient temperature, a change in ambient temperature can impact the efficiency of the voltage regulator, which can lead to inefficient operations and power loss.

**Brief Description of the Drawings**

FIG. 1 shows an apparatus including a voltage regulator (VR), according to some embodiments described herein.
FIG. 2 is a graph showing an example of efficiency curves for some of the phases of the VR and associated phase crossovers (crossover points) of the efficiency curves, according to some embodiments described herein.
FIG. 3 is a graph showing an example relationship between efficiency (in percentage) and current (in ampere) at different ambient temperatures, associated with the VR of FIG. 1, according to some embodiments described herein.
FIG. 4 is flowchart showing an example method of configuring and operating the VR of FIG. 1 using temperature phase scaling setting, according to some embodiments described herein.
FIG. 5 is a graph showing examples of efficiency curves and phase crossovers of three phases of the VR of FIG. 1, according to some embodiments described herein.
FIG. 6A is a graph showing an example relationship between an ambient temperature range and phase crossovers of efficiency curves of phase 1 and phase 2 of the VR of FIG. 1, according to some embodiments described herein.
FIG. 6B is a graph showing an example relationship between an ambient temperature range and phase crossovers of efficiency curves of phase 2 and phase 3 of the VR of FIG. 1, according to some embodiments described herein.
FIG. 7 is a flowchart showing an example of a method that can be part of the example method of FIG. 4 of configuring and operating the VR of FIG. 1, according to some embodiments described herein.
FIG. 8 shows an apparatus in the form of a system (e.g., electronic system), according to some embodiments described herein.

Detailed Description

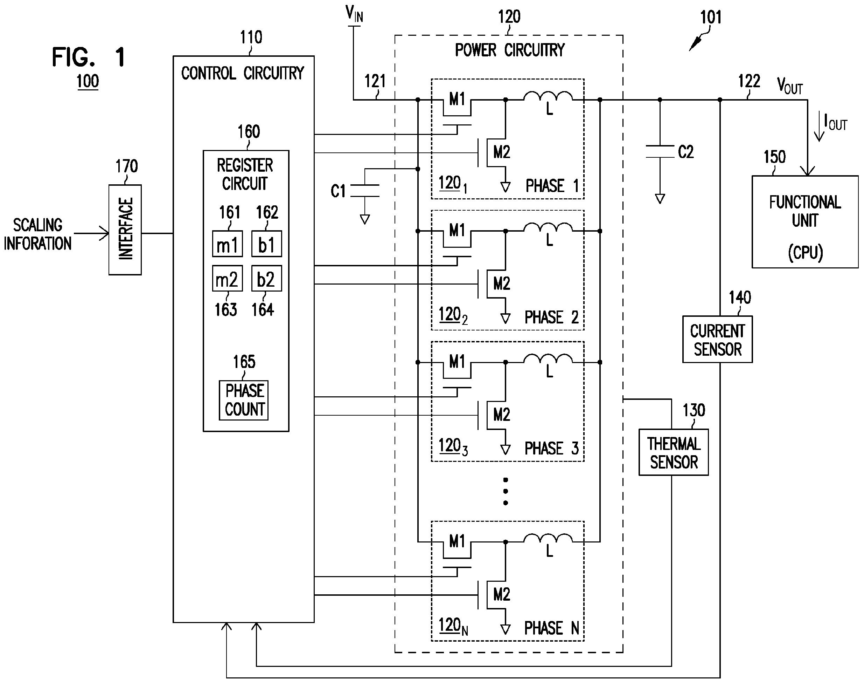

The techniques described herein involve a multi-phase voltage regulator (VR) that can dynamically adjust its phase crossover threshold values at different ambient temperatures. The described VR can apply (e.g., automatically apply) temperature phase scaling based on changes in ambient temperature to improve phase operations of the VR for efficiency improvement. In an example, the techniques described herein involve thermal sensing at the VR and temperature-based slope compensation to scale (e.g., automatically scale) phase crossover threshold value at different ambient temperatures. The described techniques can reduce impact on efficiency of the VR and reduce in power loss of the system due to ambient temperature change. Other improvements and benefits of the described techniques are discussed below with reference to FIG. 1 through FIG. 8.

FIG. 1 shows an apparatus 100 including a VR 101 according to some embodiments described herein. Apparatus 100 can include or be included in an electronic device or system, such as a computer (e.g., desktop, laptop, or notebook), a tablet, a cellular phone, a system on chip (SoC), a system in a package (SiP), or other electronic devices or systems.

As shown in FIG. 1, VR 101 can include control circuitry 110, power circuitry 120, a thermal sensor 130, a current sensor 140, and a functional unit 150.

Functional unit 150 can include components (e.g., circuitry) that can receive power (e.g., in the form of a voltage $V_{OUT}$ and a current $I_{OUT}$) at a node (e.g., output node) 122 of VR 101. Examples of the components included in functional unit 150 include circuitry of a central processing unit (CPU), a graphics processing unit (GPU), a memory device, or other electronic components. During operation of apparatus 100, functional unit 150 can consume different amounts of power depending on its operations (e.g., workload). VR 101 can operate to control (e.g., regulate) power (e.g., voltage $V_{OUT}$, current $I_{OUT}$, or both) at node 122 based on demand (e.g., operations) of functional unit 150.

As shown in FIG. 1, control circuitry 110 can include a register circuit 160, which can include registers (e.g., non-volatile memory circuits) 161, 162, 163, and 164 to store information m1, b1, m2, and b2, respectively. Information m1, b1, m2, and b2 includes temperature scaling information in which each of information m1, b1, m2, and b2 are the components of the temperature scaling information. As described in more detail below, VR 101 can use information m1, b1, m2, and b2 to calculate target phase crossover values as part of configuring VR 101 to reduce the impact of ambient temperature change on efficiency of VR 101.

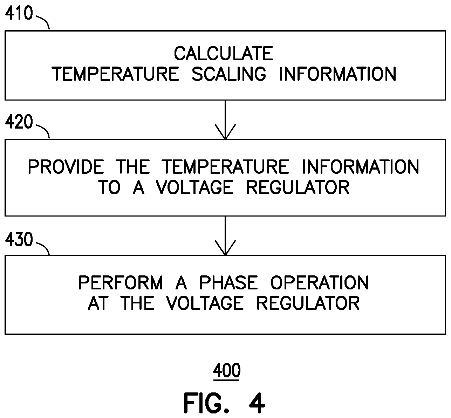

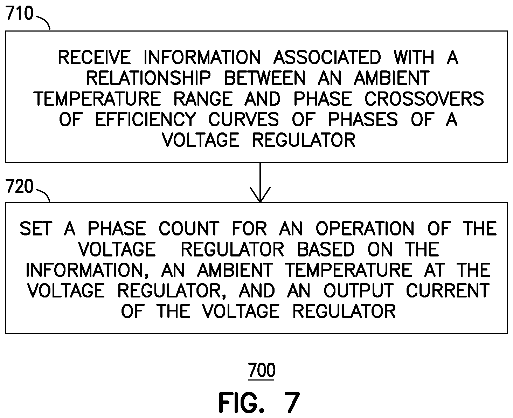

As shown in FIG. 1, register circuit 160 can include a register 165 to store a phase count. As described in more detail below, VR 101 can set the value of the phase count based at least in part on the target phase crossover values. The value of the phase count sets a phase operation for VR 101. VR 101 can operate in a single-phase operation or a multi-phase operation based on the value of the phase count. Further description of the phase count is described below (e.g., with reference to FIG. 4 and FIG. 7).

As shown in FIG. 1, power circuitry 120 can have phases (e.g., circuits or phase circuits) $120_1$ through $120_N$ that can also be called power stages (or power circuits) $120_1$ through $120_N$ of VR 101. Thus, VR 101 is a multi-phase VR that includes N phases (phase 1 through phase N, where N is at least two).

As shown in FIG. 1, each of phases $120_1$ through $120_N$ can have its own circuit elements (e.g., transistors M1 and M2 and an inductor L). Phases $120_1$ through $120_N$ can be coupled in parallel with each other between a node (e.g., input node) 121 and node (e.g., output node) 122. Nodes 121 and 122 can be coupled to capacitors C1 and C2, respectively. Node 121 can be coupled to a voltage source (e.g., a battery, not shown) to receive a voltage (e.g., input voltage) $V_{IN}$.

VR 101 can operate in either a single-phase operation (one-phase (1-ph) operation) or a multi-phase operation (e.g., two-phase (2-ph) or three-phase (3-ph) operation). A single-phase operation can also be called a single-phase mode. A multi-phase operation can also be called a multi-phase mode.

In example, VR 101 can operate in a single-phase operation when functional unit 150 consumes a relatively low amount of power (e.g., relatively low amount of current $I_{OUT}$ at node 122). In another example, VR 101 can operate in a multi-phase operation when functional unit 150 consumes a relatively high amount of power (e.g., relatively high amount of current $I_{OUT}$ at node 122). VR 101 can operate in either Discontinuous Conduction Mode (DCM) or Continuous Conduction Mode (CCM) depending on the power (e.g., current) consumption of functional unit 150.

In a single-phase operation, one of phases $120_1$ through $120_N$ (e.g., phase $120_1$) can be activated and the other phases (e.g., phase $120_2$ through $120_N$) can be deactivated. Control circuitry 110 can operate to control (e.g., turn on or turn off) transistors M1 and M2 in a particular phase (among phase $120_1$ through $120_N$) to activate or deactivate that particular phase.

In a multi-phase operation, at least two (two or more) of phases $120_1$ through $120_N$ can be activated and the other phases (among phase $120_1$ through $120_N$) can be deactivated. For example, in a 2-phase operation (which is a multi-phase operation), phase $120_1$ and phase $120_2$ (phase 1 and phase 2) can be activated and phases $120_3$ through $120_N$ (phase 3 through phase N) can be deactivated. In another example, in a 3-phase operation (which is a multi-phase operation), phase $120_1$, phase $120_2$, and phase $120_3$ (phase 1, phase 2, and phase 3) can be activated and the phases after phase 3 through $120_N$ (e.g., phase 4 through phase N) can be deactivated. VR 101 can operate in a Continuous Conduction Mode (CCM) in a multi-phase operation to improve efficiency (in comparison with the DCM).

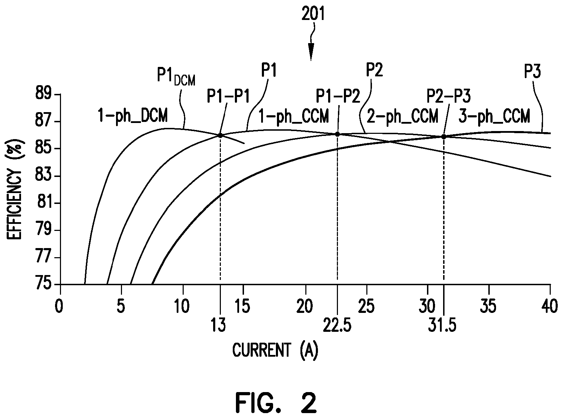

FIG. 2 is a graph 201 showing an example of efficiency curves (phase efficiency curves) for some of the phases 1 through N (e.g., of phase 1, phase 2, and phase 3) of VR 101 and associated phase crossovers (crossover points) of the efficiency curves, according to some embodiments described herein. In the description herein, "efficiency curve" refers to "phase efficiency curve"; and "efficiency curves" refers to "phase efficiency curves". This means that "efficiency curve" and "phase efficiency curve" refer to the same thing; and "efficiency curves" and "phase efficiency curves" refer to the same thing. In the description herein and in the drawings (e.g., FIG. 2, FIG. 3, and FIG. 5), "1-ph" refers to a single-phase operation (one-phase operation), "2-ph" refers to a two-phase operation (a multi-phase operation), and "3-ph" refers to a three-phase operation (a multi-phase operation). The techniques described herein use an example of 1-ph, 2-ph, and 3-ph operations. However, the techniques described herein are also applicable to other multi-phase operation (e.g., 4-ph operation, and so on, up to N-phase operation).

Each of phases 1 through N of VR 101 in FIG. 1 can have a different efficiency curve (phase efficiency curves). FIG. 2 shows efficiency curves $P1_{DCM}$ and P1 of phase 1 (phase $120_1$ of FIG. 1), an efficiency curve P2 of phase 2 (phase $120_2$ in FIG. 1), and an efficiency curve P3 of phase 3 (phase $120_3$ in FIG. 1).

In FIG. 2, the values in ampere (A) on the X-axis of graph 201 can correspond to the values of current $I_{OUT}$ node 122 of VR 101. Current $I_{OUT}$ can also be called output current of VR 101. In FIG. 2, the values in percentage on the Y-axis of graph 201 can correspond to the efficiency (in percentage) of a phase (e.g., phase 1, phase 2, or phase 3) of VR 101.

In graph 201 (and in other graphs described herein), label 1-ph_DCM indicates that VR 101 operates in a single-phase operation in DCM (Discontinuous Conduction Mode). Label 1-ph_CCM indicates the VR 101 operates in a single-phase CCM (Continuous Conduction Mode). Labels 2-ph_CCM and 3-ph_CCM indicate that VR 101 operates in multi-phase operation in CCM (Continuous Conduction Mode).

In the description herein, specific values (e.g., current values, ambient temperature values, percentage values, the number of activated phases) are used as examples to improve understanding of the techniques described herein. However, the techniques described herein are applicable to systems or voltage regulators that may have values different from those described herein.

As shown in FIG. 2, VR 101 can operate in 1-ph DCM (single-phase operation in DCM) when the current (e.g., current $I_{OUT}$ at node 122 in FIG. 1) is relatively low (e.g., less than 13A). VR 101 can switch to operating in 1-ph CCM (single-phase operation in CCM) when the current increases and reaches a certain value (e.g., reaches 13A). As the current increases (e.g., when current reaches 22.5A), VR 101 can make a phase transition and operate in 2-ph CCM, which is multi-phase (two-phase) in CCM. In the 2-ph operation, VR 101 can activate phase 1 and phase 2 (FIG. 1) one at time in a sequentially repeated pattern (e.g., phase 1, phase 2, phase 1, phase 2, and so on). In FIG. 2, VR 101 can make another phase transition (e.g., when current reaches 31.5A) and operates in 3-ph CCM, which is also a multi-phase (three-phase) operation in CCM. In the 3-ph operation, VR 101 can activate phase 1, phase 2, and phase 3 (FIG. 1) one at time in a sequentially repeated pattern (e.g., phase 1, phase 2, phase 3, phase 1, phase 2, and phase 3, and so on).

FIG. 2 shows phase crossovers P1-P1, P1-P2, and P2-P3 at respective intersections of efficiency curves P1$_{DCM}$, P1, P2 and P3. In this description, a phase crossover (e.g., P1-P1, P1-P2, or P2-P3) is also called a phase crossover point or a phase intersection.

In FIG. 2, phase crossovers P1-P1, P1-P2, and P2-P3 can correspond to a set point (e.g., optimal point) at which VR 101 activates (or deactivates) a phase (e.g., adding or subtracting a phase) to maintain the efficiency of VR 101 at a selected efficiency value (e.g., the highest or near the highest efficiency value).

During an operation of VR 101, ambient temperature at VR 101 can change. The ambient temperature change can cause the phase crossovers (e.g., phase crossovers P1-P1, P1-P2, and P2-P3 in FIG. 2) of VR 101 to shift. Such a shift can impact (e.g., degrade) the efficiency to VR 101 and can lead to power loss. However, as described below, VR 101 can be configured to operate in a setting (e.g., temperature phase scaling setting) that can reduce impact on efficiency of VR 101 due to ambient temperature change.

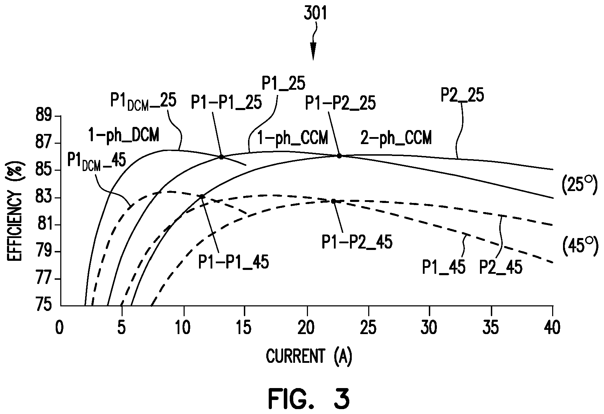

FIG. 3 is a graph 301 showing an example relationship between efficiency (in percentage) and current (in ampere) at different ambient temperatures (at an ambient temperature range) associated with VR 101, according to some embodiments described herein. For simplicity, FIG. 3 shows example efficiency curves for only two phases (phase 1 and phase 2 in FIG. 1) among phases 1 through N of VR 101.

FIG. 3 shows efficiency curves P1$_{DCM\_}$25 and P1_25 of phase 1 at 25°C and efficiency curve P2_25 of phase 2 at 25°C. Efficiency curves P1$_{DCM\_}$25, P1_25, and P2_25 can correspond to efficiency curves P1$_{DCM}$, P1 and P2, respectively, of FIG. 2. FIG. 3 also shows efficiency curves P1$_{DCM\_}$45 and P1_45 of phase 1 at 45°C and efficiency curve P2_45 of phase 2 at 45°C.

FIG. 3 also shows phase crossovers P1-P1_25 and P1-P2_25 of respective efficiency curves P1$_{DCM}$_25, P1_25, and P2_25. Phase crossovers P1-P1_25 and P1-P2_25 can correspond to phase crossovers P1-P1 and P1-P2 of FIG. 2.

As shown in FIG. 3, phase crossovers can shift (change) when ambient temperature changes. For example, as shown in FIG. 3, phase crossover P1-P1_25 shifts (changes) to phase crossover P1-P1_45 when ambient temperature changes from 25°C to 45°C. In another example, as shown in FIG. 3, phase crossover P1-P2_25 shifts (changes) to phase crossover P1-P2_45 when ambient temperature changes from 25°C to 45°C.

In FIG. 3, each of the phase crossovers (P1-P1_25, P1-P2 25, P1-P1_45, and P1-P2_45) can be called a phase crossover threshold. Each phase crossover threshold has a value (phase crossover threshold value (or phase crossover value)) measured in ampere unit on the X-axis. For example, phase crossover P1-P1_25 (phase crossover threshold P1-P1_25) can have an example value of 13A (e.g., similar to the value of phase crossover P1-P1 of FIG. 2). In another example, phase crossover P1-P2_25 (phase crossover threshold P1-P2_25) can have an example value of 22.5A (e.g., similar to the value of phase crossover P1-P2 of FIG. 2).

The distance between phase crossover P1-P1_25 and phase crossover P1-P1_45 can be called a phase crossover threshold gap (a gap between two corresponding phase crossover thresholds). The distance between phase crossover P1-P2_25 and phase crossover P1-P2_45 can also be called a phase crossover threshold gap. The change in the phase crossover threshold as shown in FIG. 3 (due to ambient temperature change) can cause power loss associated with operations of VR 101. Power loss can increase when the phase crossover threshold gap becomes bigger. This increase in power loss can lead to higher power consumption, which can impact system performance and battery life.

Some conventional voltage regulators are configured to operate using phase crossover threshold values at a fixed ambient temperature (e.g., 25°C). However, as shown in FIG. 3, the phase crossover thresholds can shift due to changes in ambient temperature. In such conventional voltage regulators, it can be inefficient (e.g., due to increased power loss) to use the same set of phase crossover threshold values at a fixed ambient temperature to make a phase transition during operation of the voltage regulators.

The following description describes techniques to configure VR 101 to reduce (e.g., minimize) power loss due to ambient temperature change. In an example described below, VR 101 can be configured to address the gap of phase crossover thresholds due to ambient temperature change by applying (e.g., dynamically applying) temperature phase scaling in VR 101. This way, the phase crossover threshold accuracy of VR 101 can be improved at different ambient temperatures to improve the total VR phase operation for efficiency improvement.

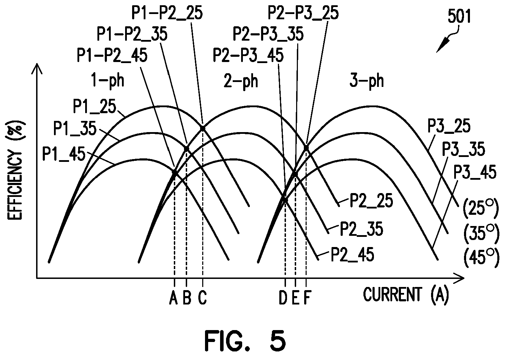

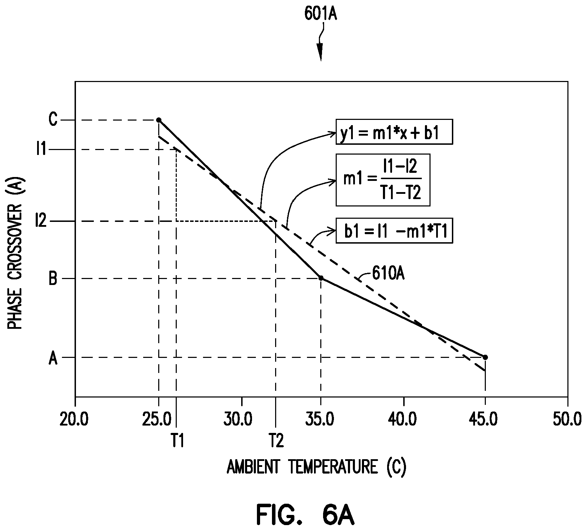

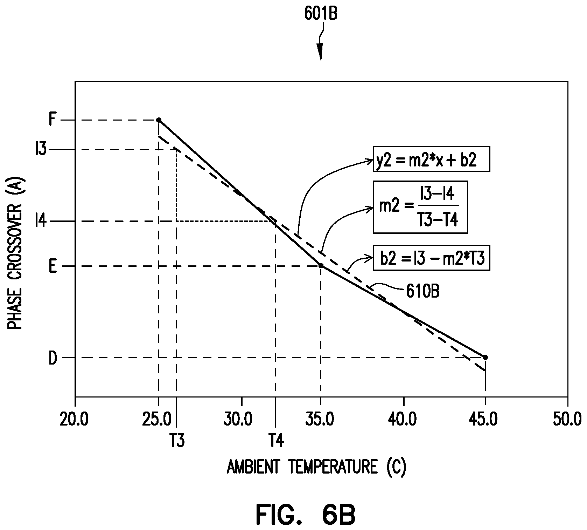

FIG. 4 is flowchart showing an example method 400 of configuring and operating VR 101 (FIG. 1) using temperature phase scaling setting, according to some embodiments described herein. As shown in FIG. 4, method 400 can include activities 410, 420, and 430. Activity 410 can include calculating temperature scaling information (which can be called temperature scaling factors). The temperature scaling information includes information m1, b1, m2, and b2 that can be subsequently stored in register circuit 160 of FIG. 1. VR 101 can use the temperature scaling information (which includes information m1, b1, m2, and b2) to configure and operate VR 101 in a temperature phase scaling mode (e.g., to reduce impact on efficiency of VR 101 due to ambient temperature change). The description (described below) with reference to FIG. 5, FIG. 6A, and FIG. 6B provides detailed techniques for calculating the temperature scaling information (e.g., information m1, b1, m2, and b2) in activity 410.

Activity 420 of method 400 of FIG. 4 can include providing the temperature scaling information (e.g., information m1, b1, m2, and b2 calculated in activity 410) to VR 101. Providing the temperature scaling information can include inputting (e.g., programming) the temperature scaling information into VR 101. For example, interface 170 of VR 101 can operate to allow inputting (e.g., programming) of the temperature scaling information (calculated in activity 410) into VR 101. Register circuit 160 (FIG. 1) of VR 101 can operate to store the temperature scaling information ((e.g., information m1, b1, m2, and b2). In an example, the user or designer of VR 101 can provide temperature scaling information to VR 101. Thus, interface 170 can include a user interface (or can be part of user interface) to allow the user or the designer of VR 101 to provide temperature scaling information to VR 101. As an example, interface 170 can include hardware, firmware, software, or any combination of hardware, firmware, and software, to allow inputting (e.g., programming) of temperature scaling information into VR 101.

Activity 430 can include performing a phase operation at VR 101. In activity 430, VR 101 can operate in a temperature phase scaling mode based at least in part on the temperature scaling information (e.g., information m1, b1, m2, and b2 provided to VR 101 in activity 420). Activity 430 can be performed by components (e.g., control circuitry 110) of VR 101 and other components associated with VR 101 (e.g., components of a system (e.g., system 800) that includes VR 101). Activity 430 can include setting (e.g., assigning) a phase count (e.g., a value from 1 to N) for a phase operation (e.g., single-phase or multi-phase) of VR 101 based at least in part on the temperature scaling information. The description with reference to FIG. 7 describes more detail of activity 430 of method 400.

FIG. 5 is a graph 501 showing examples of efficiency curves (phase efficiency curves) and phase crossovers of phase 1, phase 2, and phase 3 of VR 101, according to some embodiments described herein. Information from graph 501 can be used to calculate the temperature scaling information (e.g., information m1, b1, m2, and b2) described above in activity 410 of FIG. 4. Graph 501 can be created (e.g., generated) by the user or designer of VR 101. Data used to create graph 501 can be based on data collected from measuring of the efficiency of each of phase 1, phase 2, and phase 3 during operations (e.g., simulation) of VR 101 at different ambient temperatures (e.g., 25°C, 35°C, and 45°C, as shown in FIG. 5) in an ambient temperature range.

FIG. 5 shows efficiency curves Pl_25, P1_35, and P1_45 of phase 1 at ambient temperatures of 25°C, 45°C, and 45°C, respectively; efficiency curves P2_25, P2_35, and P2_45 of phase 2 at ambient temperatures of 25°C, 35°C, and 45°C, respectively; and efficiency curves P3_25, P3_35, and P3_45 of phase 3 at ambient temperatures of 25°C, 35°C, and 45°C, respectively.

Graph 501 shows three efficiency curves of each of phase 1, phase 2, and phase 3 at ambient temperatures of 25°C, 35°C, and 45°C as an example. However, a different number of phases (e.g., 1 through N) or a different number (or values) of ambient temperatures, or both, can be used. FIG. 5 shows an example of three phase operations (1-ph, 2-ph, and 3-ph operations) of VR 101. However, a different number of phase operations of VR 101 can be performed to collect data to create graph 501.

As shown in FIG. 5, the efficiency curves of phase 1 and phase 2 can have phase crossovers P1-P2_25 (at 25°C), P1-P2_35 (at 35°C), and P1-P2_45 (at 45°C) associated with current values (in ampere unit) A, B, and C. Values A, B, C can also be called phase crossover threshold values (or phase crossover values).

As shown in FIG. 5, the efficiency curves of phase 2 and phase 3 can have phase crossovers P2-P3_25 (at 25°C), P2-P3_35 (at 35°C), and P2-P3_45 (at 45°C) associated with current values (in ampere unit) D, E, and F. Values D, E, and F can also be called phase crossover threshold values (or phase crossover values).

Based on the information from graph 501, the relationship between an ambient temperature range (e.g., in Celsius) and phase crossovers (that include values A, B, C, D, E, and F) and can be determined (e.g., calculated), as shown in FIG. 6A and FIG. 6B. This relationship can be used to calculate temperature scaling information (e.g., information m1, b1, m2, and b2) that can be used by VR 101 to reduce the impact of temperature change on efficiency of VR 101.

FIG. 6A is a graph 601A showing an example relationship between an ambient temperature range and phase crossovers of efficiency curves of phase 1 and phase 2 of VR 101, according to some embodiments described herein. Graph 601A can be created (e.g., plotted) based on data from graph 501 of FIG. 5. For example, values (phase crossover values) A, B, and C (on the Y-axis of FIG. 6A) can correspond to values A, B, and C (on the X-axis of FIG. 5), respectively.

Temperature scaling information (e.g., information m1 and information b1) can be calculated based on graph 601A. In FIG. 6A, using linear extrapolation, the data in graph 601A can be represented with a simple formula $y1 = m1*x + b1$ associated with line 610A. In an example, the linear extrapolation has a negligeable error. In FIG. 6A, the term y1 (in formula $y1 = m1*x1 + b1$) represents a target phase crossover threshold (in ampere unit on the Y-axis) between phase 1 and phase 2 of VR 101. The term x1 in formula $y1 = m1*x1 + b1$ represents an ambient temperature at VR 101. The term m1 (which is information m1) in formula $y1 = m1*x + b1$ represents the slope of line 610A. The term b1 (which is information b1) in formula $y1 = m1*x1 + b1$ represents the Y-intercept of line 610A.

In FIG. 6A, the value of information m1 (slope of line 610A) can be calculated (e.g., manually calculated (e.g., determined) by the user or designer of VR 101) based on two values (e.g., current values I1 and I2) on the Y-axis and two values (e.g., ambient temperature values T1 and T2) on the X-axis of line 610A. For example, as shown in FIG. 6A, $m1 = (I1 - I2) / (T1 - T2)$.

In FIG. 6A, the value of information b1 (Y-intercept of line 610A) can be calculated (e.g., manually calculated (e.g., determined) by the user or designer of VR 101) based on the same values (e.g., values I1, I2, T1, and T2) used to calculate information m1 (the slope of line 610A). For example, the value of information b1 can be calculated by formula $b1 = I1 - m1 * T1$ (or alternatively $b1 = I2 - m1*T2$).

Information m1 and information b1 (calculated from graph 601A) can be subsequently provided to (e.g., programmed into) register circuit 160 of VR 101. Control circuitry 110 of VR 101 (FIG. 1) can be configured to receive information m1 and information b1 (e.g., through interface 170 in FIG. 1) and store them in register circuit 160.

Other components of temperature scaling information (e.g., information m2 and information b2) can be calculated in ways similar to those of information m1 and information b1, as described below with reference to FIG. 6B.

FIG. 6B is a graph 601B showing an example relationship between an ambient temperature range and phase crossovers of efficiency curves of phase 2 and phase 3 of VR 101, according to some embodiments described herein. Graph 601B can be created (e.g., plotted) based on data from graph 501 of FIG. 5. For example, values (phase crossover values) D, E, and F (on the Y-axis of FIG. 6B) can correspond to values D, E, and F (on the X-axis of FIG. 5), respectively.

Temperature scaling information (e.g., information m2 and information b2) can be calculated based on graph 601B. In FIG. 6B, using linear extrapolation, the data in graph 601B can be represented with a simple formula $y2 = m2*x + b2$ associated with line 610B. In an example, the linear extrapolation has a negligeable error. In FIG. 6B, the term y2 (in formula $y2 = m2*x2 + b2$) represents a target phase crossover threshold (in ampere unit on the Y-axis) between phase 2 and phase 3 of VR 101. The term x2 in formula $y2 = m2*x2 + b2$ represents an ambient temperature at VR 101. The term m2 (which is information m2) in formula $y2 = m2*x + b2$ represents the slope of line 610B. The term b2 (which is information b2) in formula $y2 = m2*x2 + b2$ represents the Y-intercept of line 610B.

In FIG. 6B, the value of information m2 (slope of line 610B) can be calculated (e.g., manually calculated (e.g., determined) by the user or designer of VR 101) based on two values (e.g., current values I3 and I4) on the Y-axis and two values (e.g., ambient temperature values T3 and T4) on the X-axis of line 610B. For example, as shown in FIG. 6B, $m2 = (I3 - I4) / (T3 - T4)$.

In FIG. 6B, the value of information b2 (Y-intercept of line 610B) can be calculated (e.g., manually calculated (e.g., determined) by the user or designer of VR 101) based on the same values (e.g., values I3, I4, T3, and T4) used to calculate information m2 (the slope of line 610B). For example, the value of information b2 can be calculated by formula $b2 = I3 - m2*T3$ (or alternatively $b2 = I4 - m2*T4$).

Information m2 and information b2 (calculated from graph 601B) can be subsequently provided to (e.g., programmed into) register circuit 160 in control circuitry 110 of VR 101 (FIG. 1).

Control circuitry 110 of VR 101 (FIG. 1) can be configured to receive information m2 and information b2 (e.g., through interface 170 in FIG. 1) and store them in register circuit 160.

FIG. 6A and FIG. 6B show an example relationship between efficiency phase crossover values (current in ampere) and ambient temperature of three phases (e.g., phase 1, phase 2, and phase 3) of VR 101 used to calculate temperature scaling information m1, b1, m2, and b2. However, a similar technique can be used for more than three phases of VR 101 at the different ambient temperatures or different input voltages (e.g., $V_{IN}$ in FIG. 1).

As described in more detail with reference to FIG. 7, VR 101 can use temperature scaling information (which includes information m1, b1, m2, and b2, calculated from graphs 601A and 601B (FIG. 6A and FIG. 6B)) to calculate target phase crossover values as part of configuring VR 101 to reduce the impact of ambient temperature change on efficiency of VR 101.

FIG. 7 is a flowchart showing an example method 700 that can be part of the example method of FIG. 4 of configuring and operating the VR of FIG. 1, according to some embodiments described herein. As shown in FIG. 7, method 700 can include activities 710 and 720. The activities (activities 710 and 720) of method 700 can be performed (e.g., executed) by components (e.g., control circuitry 110) of VR 101 and other components associated with VR 101 (e.g.,

components of a system (e.g., system 800) that includes VR 101. For simplicity, method 700 also include other activities (which are described below) that are not shown in FIG. 7.

As shown in FIG. 7, activity 710 can include receiving information associated with a relationship between an ambient temperature range and phase crossovers of efficiency curves (e.g., efficiency curves shown in FIG. 5) of the phases of a voltage regulator, which can include VR 101. The information in activity 710 can include temperature scaling information (e.g., information m1, b1, m2, and b2) calculated based on techniques described above with reference to FIG. 5, FIG. 6A, and FIG. 6B. The information in activity 710 can be received at (or through) interface 170 of VR 101. Control circuitry 110 of VR 101 (FIG. 1) can be configured to receive the information (in activity 710) through interface 170 in FIG. 1 and store the information in register circuit 160.

In FIG. 7, activity 720 can include setting a phase count for a phase operation of the voltage regulator, which includes VR 101, based on the information received in activity 710, an ambient temperature at the voltage regulator (e.g., VR 101) and an output current (e.g., current $I_{OUT}$ in FIG. 1) of the voltage regulator. As described above, the phase count can have a value from 1 to N (where N is the number of phases of the voltage regulator (e.g., VR 101).

As part of setting the phase count in activity 720, method 700 can include sensing (e.g., performed by thermal sensor 130 of FIG. 1) an ambient temperature at VR 101 during an operation of VR 101. Thermal sensor 130 can operate to sense the ambient temperature at VR 101 during the operation of VR 101 (e.g., after the information in activity 710 is received) and provide information corresponding to a value of the ambient temperature during the operation of VR 101. Method 700 can also include sensing (e.g., performed by current sensor 140 of FIG. 1) current (output current) $I_{OUT}$ at node 122 during the operation. Current sensor 140 can operate to sense current $I_{OUT}$ (e.g., after the information in activity 710 is received) and provide information corresponding to a value of current $I_{OUT}$ during the operation of RV 101.

As part of setting the phase count in activity 720, method 700 can include calculating a target phase crossover value (target phase crossover threshold) Target_Ph_Crossover_1 and a target phase crossover value (target phase crossover threshold) Target_Ph_Crossover_2 based on formulas (1) and (2), respectively, as shown below.

$$Target\_Ph\_Crossover\_1 = m1 * (ambient\_temperature) + b1 \quad (1)$$

$$Target\_Ph\_Crossover\_2 = m2 * (ambient\_temperature) + b2 \quad (2)$$

For simplicity, target phase crossover values Target_Ph_Crossover_1 and Target_Ph_Crossover_2 are sometimes called Target_Ph_Crossover_1 and Target_Ph_Crossover_2, respectively. Each of Target_Ph_Crossover_1 Target_Ph_Crossover_2 has a value measured in ampere unit.

In formulas (1) and (2), information m1, b1, m2, and b2 have known values (e.g., calculated with reference to FIG. 6A and FIG. 6B) and stored in register circuit 160 of VR 101.

In formulas (1) and (2), the term ambient_temperature represents ambient temperature (e.g., sensed ambient temperature) that can be provided by thermal sensor 130 (FIG. 1) during an operation of VR 101.

Thus, based on formula (1), the value of Target_Ph_Crossover_1 can be calculated by substituting the values for m1 and b1 (stored in register circuit 160) and the value for ambient_temperature (sensed ambient temperature) in formula (1).

Similarly, based on formula (2), the value of Target_Ph_Crossover_2 can be calculated by substituting the values for m2 and b2 (stored in register circuit 160) and the value for ambient_temperature (sensed ambient temperature) in formula (2). The value for ambient_temperature (sensed ambient temperature) for formula (1) and formula (2) can be the same.

The values of Target_Ph_Crossover_1 and Target_Ph_Crossover_2 can be stored in VR 101. For example, control circuitry 110 can be configured to store the values of Target_Ph_Crossover_1 and Target_Ph_Crossover_2 in register circuit 160.

As part of setting the phase count in activity 720, method 700 can include comparing the value (sensed value) of current $I_{OUT}$ of VR 101 during the operation with the value of each of Target_Ph_Crossover_1 (calculated from formula 1) and Target_Ph_Crossover_2 (calculated from formula 2) to provide a comparison result. Based on this comparison result, activity 720 can set the phase count to one of values 1 through N. The value of the phase count sets the phase operation of VR 101 to one of 1-ph, 2-ph, 3-ph operation or other phase operation, as described below. A summary of the value of the phase count based on the comparison result is shown below.

$$Phase\ count = 1\ if\ I_{OUT} < Target\_Ph\_Crossover\_1$$

Phase count = 2 if Target_Ph_Crossover_1 $\leq I_{OUT} <$ Target_Ph_Crossover_2

$$\text{Phase count} = 3 \text{ if } I_{OUT} \geq \text{Target\_Ph\_Crossover\_2}$$

Thus, activity 720 can include setting the phase count to a value (e.g., phase count = 1) to set (enable) VR 101 to operate in a single-phase (1-ph) operation based on (e.g., if) the value of the current $I_{OUT}$ (sensed by current sensor 140) being less than the value of Target_Ph_Crossover_1 (e.g., $I_{OUT}$ < Target Ph_Crossover 1).

Activity 720 can include setting the phase count to a value (e.g., phase count = 2) to set (enable) VR 101 to operate in a two-phase (2-ph) operation based on (e.g., if) the value of the current $I_{OUT}$ (sensed by current sensor 140) being not less than the value of Target_Ph_Crossover_1 and less than the value of Target_Ph_Crossover_2 (e.g., Target_Ph_Crossover_1 $\leq I_{OUT}$ < Target_Ph_Crossover_2).

Activity 720 can include setting the phase count to a value (e.g., phase count = 3) to set (enable) VR 101 to operate in a three-phase (3-ph) operation based on (e.g., if) the value of the current $I_{OUT}$ (sensed by current sensor 140) being not less than the value of Target_Ph_Crossover_2 (e.g., $I_{OUT} \geq$ Target_Ph_Crossover_2).

The values of Target_Ph_Crossover_1 and Target_Ph_Crossover_2 can be adjusted (e.g., dynamically adjusted) in response to (responsive to) changes in ambient temperature during operation of VR 101. For example, control circuitry 110 of VR 101 can be configured to adjust (e.g., increase or decrease) the values of Target_Ph_Crossover_1 and Target_Ph_Crossover_2 in response to changes in ambient temperature during operation of VR 101 (and power consumption of functional unit 150 of FIG. 1). As an example, control circuitry 110 can receive sensed ambient temperature (e.g., from thermal sensor 130 in FIG. 1) at VR 101 in a periodic or non-periodic fashion during an operation of VR 101. Based on the sensed ambient temperature, control circuitry 110 can calculate a new value (e.g., adjusted value) for each of Target_Ph_Crossover_1 and Target_Ph_Crossover_2 based on formula (1) and formula (2). Then, control circuitry 110 can compare a new value of sensed current $I_{OUT}$ (e.g., provided by current sensor 140 of FIG. 1) with the new values of Target_Ph_Crossover_1 and Target_Ph_Crossover_2 to generate a new comparison result. Based on the new comparison result, control circuitry 110 can adjust (e.g., update) the phase count to set the phase operation of VR 101 based on the adjusted (e.g., updated) phase count. Thus, as described herein, control circuitry 110 can periodically or non-periodically adjust the values of Target_Ph_Crossover_1 and Target_Ph_Crossover_2 in response to (responsive to) the change in ambient temperature.

Method 700 described above can include fewer or more activities relative to activities 710 and 720 shown in FIG. 7. For example, method 700 can include additional activities (e.g., operations) associated with the apparatuses (e.g., apparatus 100 including VR 101) and/or system (e.g., system 800). In some embodiments, method 700 can further include activities (e.g., operations) in the examples listed below.

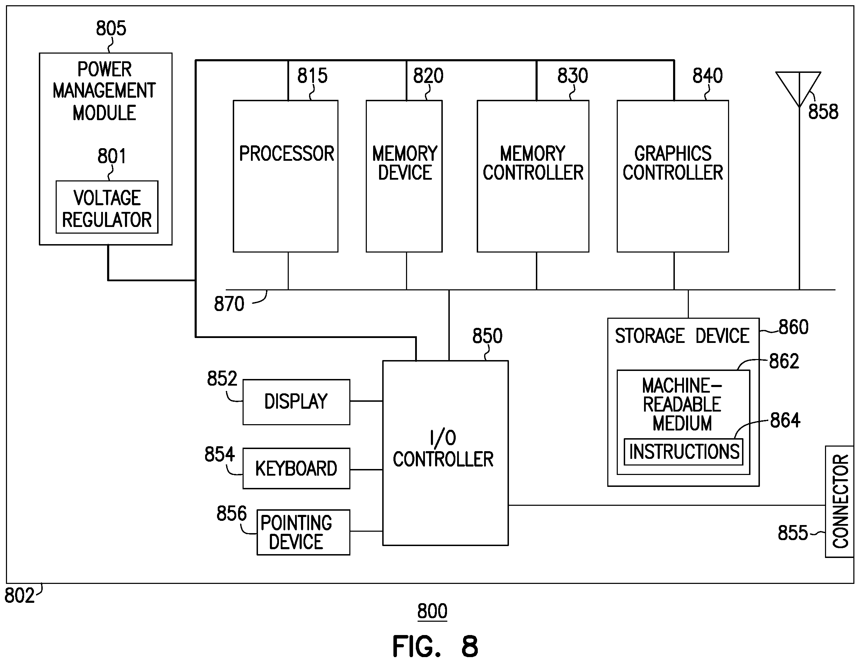

FIG. 8 shows an apparatus in the form of a system (e.g., electronic system) 800, according to some embodiments described herein. System 800 can be viewed as a machine. System (e.g., machine) 800 can include or be included in a computer, a cellular phone, or other electronic systems. As shown in FIG. 8, system 800 can include components (e.g., devices) located on a circuit board (e.g., PCB) 802. The components can include processor (e.g., a hardware processor) 815, memory device 820, memory controller 830, graphics controller 840, I/O controller 850, a display 852, a keyboard 854, a pointing device 856, at least one antenna 858, a storage device 860, and a bus 870. Bus 870 can include conductive lines (e.g., metal-based traces on a circuit board 802 where the components of system 800 are located).

System 800 can also include a power management module (e.g. power unit) 805 to manage and provide power (e.g., from a battery, not shown) to other components of system 800. Power management module 805 can include a voltage regulator (VR) 801. VR 801 can include VR 101 described above with reference to FIG. 1 through FIG. 7. FIG. 8 shows VR 801 included in power management module 805 as an example. However, some portions or all of VR 801 can be located outside power management module 805 and located in other components of system 800. Some or all or VR 810 can also be located on circuit board 802.

System 800 may be configured to perform one or more of the methods and/or operations described herein. At least one of the components of system 800 (e.g., at least one of processor 815, memory device 820, memory controller 830, graphics controller 840, and I/O controller 850) can include a device or functional unit (e.g., functional unit 150) described herein in which the device or a device or functional unit can include circuitry and operation, as described above with reference to FIG. 1 through FIG. 7.

In FIG. 8, processor 815 can include a general-purpose processor or an application specific integrated circuit (ASIC). Processor 815 can include a central processing unit (CPU) and processing circuitry. Graphics controller 840 can include a graphics processing unit (GPU) and processing circuitry. Memory device 820 can include a dynamic random-access memory (DRAM) device, a static random-access memory (SRAM) device, a flash memory device, phase change memory, or a combination of these memory devices, or other types of memory. FIG. 8 shows an example where memory device 820 is a stand-alone memory device separated from processor 815. In an alternative structure, memory device 820 and processor 815 can be located on the same IC chip (e.g., a semiconductor die or IC die). In such an alternative structure, memory device 820 is an embedded memory in processor 815, such as embedded DRAM (eDRAM), embedded SRAM (eSRAM), embedded flash memory, or another type of embedded memory.

Storage device 860 can include a drive unit (e.g., hard disk drive (HHD), solid-state drive (SSD), or another mass storage device). Storage device 860 can include a machine-readable medium 862 and processing circuitry. Machine-readable medium 862 can store one or more sets of data structures or instructions 864 (e.g., software) embodying or used by any one or more of the techniques or functions described herein. Instructions 864 may also reside, completely or at least partially, within memory device 820, memory controller 830, processor 815, or graphics controller 840 during execution thereof by system (e.g., machine) 800.

In an example, one of (or any combination of) processor 815, memory device 820, memory controller 830, graphics controller 840, and storage device 860 may constitute machine-readable media. Non-limiting machine-readable medium examples may include solid-state memories and optical and magnetic media. Specific examples of machine-readable media may include non-volatile memory, such as semiconductor memory devices (e.g., EPROM or EEPROM) and flash memory devices; magnetic disks, such as internal hard disks and removable disks; magneto-optical disks; RAM; and CD-ROM and DVD-ROM disks.

FIG. 8 shows machine-readable medium 862 as a single medium as an example. However, the term "machine-readable medium" may include a single medium or multiple media (e.g., a centralized or distributed database, and/or associated caches and servers) configured to store instructions 864. Further, the term "machine-readable medium" may include any medium that is capable of storing, encoding, or carrying instructions for execution by system 800 and that causes system 800 to perform any one or more of the techniques of the present disclosure, or that is capable of storing, encoding or carrying data structures used by or associated with such instructions. In some examples, machine-readable media may include non-transitory machine-readable media. In some examples, machine-readable media may include machine-readable media that is not a transitory propagating signal.

Display 852 can include a liquid crystal display (LCD), a touchscreen (e.g., capacitive or resistive touchscreen), or another type of display. Pointing device 856 can include a mouse, a stylus, or another type of pointing device. In some structures, system 800 does not have to include a display. Thus, in such structures, display 852 can be omitted from system 800.

Antenna 858 can include one or more directional or omnidirectional antennas, including, for example, dipole antennas, monopole antennas, patch antennas, loop antennas, microstrip antennas, or other types of antennas suitable for transmission of radio frequency (RF) signals. In some structures, system 800 does not have to include an antenna. Thus, in such structures, antenna 858 can be omitted from system 800.

I/O controller 850 can include a communication module for wired or wireless communication (e.g., communication through one or more antennas 858). Such wireless communication may include communication in accordance with WiFi communication technique, Long Term Evolution Advanced (LTE-A) communication technique, Fifth Generation (5G) wireless system or variations or derivatives, 5G mobile networks system or variations or derivatives, 5G New Radio (NR) system or variations or derivatives, or other cellular service standards, or other communication techniques.

I/O controller 850 can also include a module to allow system 800 to communicate with other devices or systems in accordance with to one or more of the following standards or specifications (e.g., I/O standards or specifications), including Universal Serial Bus (USB), DisplayPort (DP), High-Definition Multimedia Interface (HDMI), Thunderbolt, Peripheral Component Interconnect Express (PCIe), Ethernet, and other specifications.

Connector 855 can include terminals (e.g., pins) to allow system 800 to receive a connection (e.g., an electrical connection) from an external device (or system). This may allow system 800 to communicate (e.g., exchange information) with such a device (or system) through connector 855. Connector 855 and at least a portion of bus 870 can include conductive lines that conform with at least one of USB, DP, HDMI, Thunderbolt, PCIe, Ethernet, and other specifications.

FIG. 8 shows the components (e.g., devices) of system 800 arranged separately from each other as an example. For example, each of processor 815, memory device 820, memory controller 830, graphics controller 840, and I/O controller 850 can be included in (e.g., formed in or formed on) a separate IC chip (e.g., separate semiconductor die or separate IC die). In some structures of system 800, two or more components (e.g., processor 815, memory device 820, graphics controller 840, and I/O controller 850) of system 800 can be included in (e.g., formed in or formed on) the same IC chip (e.g., same semiconductor die), forming a SoC. Alternatively, two or more components (e.g., processor 815, memory device 820, graphics controller 840, and I/O controller 850) of system 800 can be included in the same package (e.g., same SiP).

The illustrations of the apparatuses (e.g., apparatus 100 including VR 101, and system 800) and methods (e.g., methods 400 and 700) described above are intended to provide a general understanding of the structure of different embodiments and are not intended to provide a complete description of all the elements and features of an apparatus that might make use of the structures described herein.

Any of the components described above with reference to FIG. 1 through FIG. 8 can be implemented in a number of ways, including simulation via software. Thus, apparatuses (e.g., apparatus 100 including VR 101, and system 800) may all be characterized as "modules" (or "module") herein. Such modules may include hardware circuitry, single- and/or multi-processor circuits, memory circuits, software program modules and objects and/or firmware, and combinations thereof, as desired and/or as appropriate for particular implementations of various embodiments. For example, such modules may be included in a system operation simulation package, such as a software electrical signal simulation package, a power usage and ranges simulation package, a capacitance-inductance simulation package, a power/heat dissipation simulation package, a signal transmission-reception simulation package, and/or a combination of software and hardware used to operate or simulate the operation of various potential embodiments.

The apparatuses and methods described above can include or be included in high-speed computers, communication and signal processing circuitry, single- or multi-processor modules, single or multiple embedded processors, multicore processors, message information switches, and application-specific modules including multilayer, multichip modules. Such apparatuses may further be included as subcomponents within a variety of other apparatuses (e.g., electronic systems), such as televisions, cellular telephones, personal computers (e.g., laptop computers, desktop computers, handheld computers, tablet computers, etc.), workstations, radios, video players, audio players (e.g., MP3 (Motion Picture Experts Group, Audio Layer 3) players), vehicles, medical devices (e.g., heart monitor, blood pressure monitor, etc.), set top boxes, and others.

In the detailed description and the claims, the terms "first," "second," and "third," etc. are used merely as labels, and are not intended to impose numerical requirements on their objects.

In the detailed description and the claims, the term "on" used with respect to two or more elements (e.g., materials), one "on" the other, means at least some contact between the elements (e.g., between the materials). The term "over" means the elements (e.g., materials) are in close proximity, but possibly with one or more additional intervening elements (e.g., materials) such that contact is possible but not required. Neither "on" nor "over" implies any directionality as used herein unless stated as such.

In the detailed description and the claims, the term "adjacent" generally refers to a position of a thing being next to (e.g., either immediately next to or close to with one or more things between them) or adjoining another thing (e.g., abutting it or contacting it (e.g., directly coupled to) it).

In the detailed description and the claims, a list of items joined by the term "at least one of" can mean any combination of the listed items. For example, if items A and B are listed, then the phrase "at least one of A and B" means A only; B only; or A and B. In another example, if items A, B, and C are listed, then the phrase "at least one of A, B and C" means A only; B only; C only; A and B (excluding C); A and C (excluding B); B and C (excluding A); or all of A, B, and C. Item A can include a single element or multiple elements. Item B can include a single element or multiple elements. Item C can include a single element or multiple elements.

In the detailed description and the claims, a list of items joined by the term "one of" can mean only one of the list items. For example, if items A and B are listed, then the phrase "one of A and B" means A only (excluding B), or B only (excluding A). In another example, if items A, B, and C are listed, then the phrase "one of A, B and C" means A only; B only; or C only. Item A can include a single element or multiple elements. Item B can include a single element or multiple elements. Item C can include a single element or multiple elements.

Described implementations of the subject matter can include one or more features, alone or in combination as illustrated below by way of examples.

Example 1 is an apparatus comprising a voltage regulator, a register circuit to store information associated with a relationship between an ambient temperature range and phase crossovers of phase efficiency curves associated with the voltage regulator, and control circuitry to calculate a target phase crossover value based on the information and an ambient temperature at the voltage regulator.

In Example 2, the subject matter of Example 1 includes subject matter wherein the control circuitry is to adjust the target phase crossover value in response to a change in a value of the ambient temperature at the voltage regulator.

In Example 3, the subject matter of any of Examples 1-2 includes subject matter wherein the control circuitry is to set a phase count for a phase operation of the voltage regulator based on the target phase crossover value and an output current of the voltage regulator.

In Example 4, the subject matter of any of Examples 1-3 includes subject matter wherein the control circuitry is to activate one of a single phase circuit and multiple phase circuits the voltage regulator during a phase operation of the voltage regulator based on the phase count.

In Example 5, the subject matter of any of Examples 1-4 includes subject matter wherein the information includes a value of at least one slope of at least one line representing a relationship between an ambient temperature and the phase crossovers of the phase efficiency curves, and a value of at least one y-intercept of the at least one line.

In Example 6, the subject matter of any of Examples 1-5 includes subject matter wherein the apparatus comprises a system on chip (SoC), the SoC including an integrated circuit (IC) die, and wherein at least part of the voltage regulator is included in the IC die.

In Example 7, the subject matter of any of Examples 1-6 includes subject matter wherein the apparatus comprises a circuit board, and at least part of the voltage regulator is located on the circuit board.

In Example 8, the subject matter of any of Examples 1-7 includes subject matter wherein the control circuitry is to periodically adjust the target phase crossover value during the operation of the voltage regulator.

In Example 9, the subject matter of any of Examples 1-7 includes subject matter wherein the control circuitry is to non-periodically adjust the target phase crossover value during the operation of the voltage regulator.

In Example 10, the subject matter of any of Examples 1-3 and 5-9 includes subject matter wherein the control circuitry is to activate a single phase of the phases of the voltage regulator during the phase operation based on the phase count.

In Example 11, the subject matter of any of Examples 1-3 and 5-9 includes subject matter wherein the control circuitry is to sequentially activate two phases of the phases of the voltage regulator during the phase operation based on the phase count.

In Example 12, the subject matter of any of Examples 1-3 and 5-9 includes subject matter wherein the control circuitry is to sequentially activate three phases of the phases of the voltage regulator during the phase operation based on the phase count.

In Example 13, the subject matter of any of Examples 1-4 and 6-12 includes subject matter wherein the information includes a value of a slope of a first line representing a relationship between ambient temperature and phase crossovers of the efficiency curves of a first phase and a second phase of the phases of the voltage regulator, value of a y-intercept of the first line, a value of a slope of a second line representing a relationship between ambient temperature and phase crossovers of the efficiency curves of the second phase and a third phase of the phases of the voltage regulator, and value of a y-intercept of the second line.

Example 14 is an apparatus comprising a voltage regulator, an interface to receive information associated with a relationship between an ambient temperature range and phase crossovers of phase efficiency curves associated with the voltage regulator, and control circuitry to calculate a target phase crossover value based on the information and an ambient temperature at the voltage regulator, and set a phase count for a phase operation of the voltage regulator based on an output current of the voltage regulator and the target phase crossover value.

In Example 15, the subject matter of Example 14 includes subject matter wherein the control circuitry is to set the phase count to one of a first phase count associated with a single-phase operation of the voltage regulator and a second phase count associated with a multi-phase operation of the voltage regulator.

In Example 16, the subject matter of Example 14 includes subject matter wherein the control circuitry is to set the phase count to a phase count associated with a single-phase operation of the voltage regulator if the value of the output current is less than the target phase crossover value.

In Example 17, the subject matter of Example 14 includes subject matter wherein the control circuitry is to set the phase count to a phase count associated with a multi-phase operation of the voltage regulator if the value of the current is not less than the target phase crossover value.

In Example 18, the subject matter of any of Examples 14-17 includes subject matter wherein the target phase crossover value is a first target phase crossover value, and the control circuitry is to calculate a second target phase crossover value based on the information and the ambient temperature during an operation of the voltage regulator, and set the phase count for the phase operation of the voltage regulator based on the output current of the voltage regulator, the first target phase crossover value, and the second target phase crossover value.

In Example 19, the subject matter of any of Examples 14-18 includes subject matter wherein the apparatus comprises a system in a package (SiP), the SiP including an integrated circuit (IC) die, wherein the voltage regulator is included in the SiP.

In Example 20, the subject matter of any of Examples 14-19 includes a connector and an integrated circuit (IC) die coupled to the connector, the IC die including the voltage regulator, wherein the connector conforms with at least one of Universal Serial Bus (USB), High-Definition Multimedia Interface (HDMI), Thunderbolt, Peripheral Component Interconnect Express (PCIe), and Ethernet specifications.

In Example 21, the subject matter of any of Examples 14-20 includes a register circuit to store the information.

In Example 22, the subject matter of any of Examples 14-20 includes a non-volatile memory circuit to store the information.

In Example 23, the subject matter of Example 14 includes subject matter wherein the phase count includes one of a first phase count associated with a single-phase operation of the voltage regulator and a second phase count associated with a multi-phase operation of the voltage regulator.

In Example 24, the subject matter of any of Examples 14-23 includes a thermal sensor to sense the ambient temperature during the operation and provide information corresponding to a value of the ambient temperature during the operation of the voltage regulator.

In Example 25, the subject matter of any of Examples 14-24 includes a current sensor to sense the output current and provide information corresponding to a value of the output current during the operation of the voltage regulator.

In Example 26, the subject matter of any of Examples 14-25 includes subject matter wherein the control circuitry is to compare a value of the output current with a value of the target phase crossover value to provide a comparison result, and set the phase count based on the comparison result.

In Example 27, the subject matter of any of Examples 14-26 includes subject matter wherein the information includes a value of a slope of a line representing a relationship between the ambient temperature range and the phase crossovers, and value of a y-intercept of the line.

In Example 28, the subject matter of any of Examples 14-26 includes subject matter wherein the information includes a value of a slope of a first line representing a relationship between ambient temperature and phase crossovers of the efficiency curves of a first phase and a second phase of the phases of the voltage regulator, value of a y-intercept of the first line, a value of a slope of a second line representing a relationship between ambient temperature and phase crossovers of the efficiency curves of the second phase and a third phase of the phases of the voltage regulator, and value of a y-intercept of the second line.

Example 29 is method comprising receiving information associated with a relationship between an ambient temperature range and phase crossovers of phase efficiency curves associated with a voltage regulator, and setting a phase count for an operation of the voltage regulator based on the information, an ambient temperature at the voltage regulator, and an output current of the voltage regulator.

In Example 39, the subject matter of Example 29 includes subject matter wherein setting the phase count includes calculating a target phase crossover value based on the information and the ambient temperature at the voltage regulator, and setting the phase count for one of a single-phase operation and a multi-phase operation of the voltage regulator based on the target phase crossover value and a value of the output current of the voltage regulator.

In Example 31, the subject matter of any of Examples 29-30 includes subject matter wherein the setting includes setting a phase count associated with a single-phase operation of the voltage regulator based on the value of the output current being less than the target phase crossover value.

In Example 32, the subject matter of any of Examples 29-31 includes subject matter wherein the setting includes setting a phase count associated with a multi-phase operation of the voltage regulator based on the value of the output current being not less than the target phase crossover value.

In Example 33, the subject matter of Example 29 includes subject matter wherein setting the phase count includes calculating a first target phase crossover value based on a value of a first component and a value of a second component of the information and the ambient temperature at the voltage regulator, calculating a second target phase crossover value based on a value of a third component and a value of a fourth component of the information and the ambient temperature at the voltage regulator, setting the phase count to a first value based on the value of the output current being less than the first target phase crossover value, setting the phase count to a second value based on the value of the output current being not less than the first target phase crossover value and less than the second target phase crossover value, and setting the phase count to a third value based on the value of the output current being not less than the second target phase crossover value.

In Example 34, the subject matter of any of Examples 29-33 includes creating a graph based on t4he relationship between the ambient temperature range and the phase crossovers of efficiency curves of the phases of the voltage regulator, calculating a value of a slope of a line on the graph in which the line represents the relationship between the ambient temperature range and the phase crossovers of efficiency curves of the phases of the voltage regulator, and calculating a value of a y-intercept of the line, wherein the value of the slope and the value of the y-intercept of the line are part of the information.

In Example 35, the subject matter of any of Examples 29-34 includes adjusting the target phase crossover value during the operation of the voltage regulator.

In Example 36, the subject matter of any of Examples 29-35 includes periodically adjusting the target phase crossover value during the operation of the voltage regulator.

In Example 37, the subject matter of any of Examples 29-36 includes sensing the ambient temperature at the voltage regulator after receiving the information to provide information corresponding to the value of the ambient temperature at the voltage regulator.

In Example 38, the subject matter of any of Examples 29-37 includes sensing the output current after receiving information to provide information corresponding to the value of the output current.

Example 39 is at least one machine-readable medium including instructions that, when executed by processing circuitry, cause the processing circuitry to perform operations to implement any of Examples 1-38.

Example 40 is an apparatus comprising means to implement any of Examples 1-38.

Example 41 is a system to implement any of Examples 1-38.

Example 42 is a method to implement any of Examples 1-38.

The above description and the drawings illustrate some embodiments of the inventive subject matter to enable those skilled in the art to practice the embodiments of the inventive subject matter. Other embodiments may incorporate structural, logical, electrical, process, and other changes. Examples merely typify possible variations. Portions and features of some embodiments may be included in, or substituted for, those of others. Many other embodiments will be apparent to those of skill in the art upon reading and understanding the above description.

The Abstract is provided to allow the reader to ascertain the nature and gist of the technical disclosure. It is submitted with the understanding that it will not be used to limit or interpret the scope or meaning of the claims. The following claims are hereby incorporated into the detailed description, with each claim standing on its own as a separate embodiment.

**Claims**

1. An apparatus comprising:

    a voltage regulator;
    a register circuit to store information associated with a relationship between an ambient temperature range and phase crossovers of phase efficiency curves associated with the voltage regulator; and
    control circuitry to calculate a target phase crossover value based on the information and an ambient temperature at the voltage regulator.

2. The apparatus of claim 1, wherein the control circuitry is to adjust the target phase crossover value in response to a change in a value of the ambient temperature at the voltage regulator.

3. The apparatus of any one of claims 1 or 2, wherein the control circuitry is to set a phase count for a phase operation of the voltage regulator based on the target phase crossover value and an output current of the voltage regulator.

4. The apparatus of claim 3, wherein the control circuitry is to activate one of a single phase circuit and multiple phase circuits the voltage regulator during a phase operation of the voltage regulator based on the phase count.

5. The apparatus of any one of claims 1 to 4, wherein the information includes:

    a value of at least one slope of at least one line representing a relationship between an ambient temperature and the phase crossovers of the phase efficiency curves; and
    a value of at least one y-intercept of the at least one line.

6. The apparatus of any one of claims 1 to 5, wherein the apparatus comprises a system on chip (SoC), the SoC including an integrated circuit (IC) die, and wherein at least part of the voltage regulator is included in the IC die.

7. The apparatus of any one of claims 1 to 6, wherein the apparatus comprises a circuit board, and at least part of the voltage regulator is located on the circuit board.

8. A method comprising:

    receiving information associated with a relationship between an ambient temperature range and phase crossovers of phase efficiency curves associated with a voltage regulator; and
    setting a phase count for an operation of the voltage regulator based on the information, an ambient temperature at the voltage regulator, and an output current of the voltage regulator.

9. The method of claim 8, wherein setting the phase count includes:

    calculating a target phase crossover value based on the information and the ambient temperature at the voltage regulator; and
    setting the phase count for one of a single-phase operation and a multi-phase operation of the voltage regulator based on the target phase crossover value and a value of the output current of the voltage regulator.

10. The method of claim 9, wherein the setting includes setting a phase count associated with a single-phase operation of the voltage regulator based on the value of the output current being less than the target phase crossover value.

11. The method of any one of claims 9 or 10, wherein the setting includes setting a phase count associated with a multi-phase operation of the voltage regulator based on the value of the output current being not less than the target phase crossover value.

12. The method of any one of claims 8 to 11, wherein setting the phase count includes:

calculating a first target phase crossover value based on a value of a first component and a value of a second component of the information and the ambient temperature at the voltage regulator;

calculating a second target phase crossover value based on a value of a third component and a value of a fourth component of the information and the ambient temperature at the voltage regulator;

setting the phase count to a first value based on the value of the output current being less than the first target phase crossover value;

setting the phase count to a second value based on the value of the output current being not less than the first target phase crossover value and less than the second target phase crossover value; and

setting the phase count to a third value based on the value of the output current being not less than the second target phase crossover value.

13. The method of any one of claims 8 to 12, further comprising:

creating a graph based on the relationship between the ambient temperature range and the phase crossovers of efficiency curves of the phases of the voltage regulator;

calculating a value of a slope of a line on the graph in which the line represents the relationship between the ambient temperature range and the phase crossovers of efficiency curves of the phases of the voltage regulator; and

calculating a value of a y-intercept of the line, wherein the value of the slope and the value of the y-intercept of the line are part of the information.

FIG. 1
100

FIG. 2

FIG. 3

410

CALCULATE
TEMPERATURE SCALING INFORMATION

420

PROVIDE THE TEMPERATURE INFORMATION
TO A VOLTAGE REGULATOR

430

PERFORM A PHASE OPERATION
AT THE VOLTAGE REGULATOR

400

FIG. 4

FIG. 5

FIG. 6A

EP 4 576 542 A1

601B

$$y2 = m2*x + b2$$

$$m2 = \frac{I3-I4}{T3-T4}$$

$$b2 = I3 - m2*T3$$

610B

PHASE CROSSOVER (A)

F
I3
I4
E
D

20.0   25.0   30.0   35.0   40.0   45.0   50.0

T3   T4

AMBIENT TEMPERATURE (C)

## FIG. 6B

710

┌─────────────────────────────────────────────┐
│  RECEIVE INFORMATION ASSOCIATED WITH A      │
│  RELATIONSHIP BETWEEN AN AMBIENT            │
│  TEMPERATURE RANGE AND PHASE CROSSOVERS     │
│  OF EFFICIENCY CURVES OF PHASES OF A        │
│  VOLTAGE REGULATOR                          │
└─────────────────────────────────────────────┘

720

┌─────────────────────────────────────────────┐
│  SET A PHASE COUNT FOR AN OPERATION OF THE  │
│  VOLTAGE REGULATOR BASED ON THE             │
│  INFORMATION, AN AMBIENT TEMPERATURE AT THE │
│  VOLTAGE REGULATOR, AND AN OUTPUT CURRENT   │
│  OF THE VOLTAGE REGULATOR                   │
└─────────────────────────────────────────────┘

700

FIG. 7

FIG. 8

EP 4 576 542 A1

Europäisches
Patentamt

European
Patent Office

Office européen
des brevets

# EUROPEAN SEARCH REPORT

**Application Number**

EP 24 21 4747

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/316255 A1 (TANG BENJAMIM [US]) 1 November 2018 (2018-11-01) * figure 1 * * paragraph [0005] * * paragraph [0008] * * paragraph [0010] * * paragraph [0028] * ----- | 1-13 | INV. H02M3/158 H02M1/00 |
| A | US 2018/109183 A1 (STÖGER CHRISTIAN [AT]) 19 April 2018 (2018-04-19) * paragraph [0013] * ----- | 1-13 | |
| A | US 10 663 998 B1 (SALUS TAMIR [IL] ET AL) 26 May 2020 (2020-05-26) * column 8, line 19 - column 8, line 21 * ----- | 1-13 | |

**TECHNICAL FIELDS SEARCHED (IPC)**

H02M

The present search report has been drawn up for all claims

| Place of search | Date of completion of the search | Examiner |
|---|---|---|
| The Hague | 7 May 2025 | Gotzig, Bernhard |

EPO FORM 1503 03.82 (P04C01)

## ANNEX TO THE EUROPEAN SEARCH REPORT
## ON EUROPEAN PATENT APPLICATION NO.

EP 24 21 4747

This annex lists the patent family members relating to the patent documents cited in the above-mentioned European search report.
The members are as contained in the European Patent Office EDP file on
The European Patent Office is in no way liable for these particulars which are merely given for the purpose of information.

07-05-2025

| Patent document cited in search report | Publication date | Patent family member(s) | Publication date |
|---|---|---|---|
| US 2018316255 A1 | 01-11-2018 | CN 108809054 A | 13-11-2018 |
| | | EP 3399633 A1 | 07-11-2018 |
| | | US 2018316255 A1 | 01-11-2018 |
| US 2018109183 A1 | 19-04-2018 | CN 107113935 A | 29-08-2017 |
| | | DE 102015206243 A1 | 27-10-2016 |
| | | EP 3281288 A1 | 14-02-2018 |
| | | JP 6513215 B2 | 15-05-2019 |
| | | JP 2018511296 A | 19-04-2018 |
| | | US 2018109183 A1 | 19-04-2018 |
| | | WO 2016162243 A1 | 13-10-2016 |
| US 10663998 B1 | 26-05-2020 | BR 112021017101 A2 | 03-11-2021 |
| | | CN 113508518 A | 15-10-2021 |
| | | EP 3949098 A1 | 09-02-2022 |
| | | US 10663998 B1 | 26-05-2020 |
| | | WO 2020205093 A1 | 08-10-2020 |

EPO FORM P0459

For more details about this annex : see Official Journal of the European Patent Office, No. 12/82